(19) Europäisches Patentamt
European Patent Office
Office européen des brevets

(11) **EP 2 174 046 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(51) Int Cl.:
*F16K 31/06* (2006.01)   *F02D 41/20* (2006.01)
*H01F 7/18* (2006.01)

(21) Anmeldenummer: **08760716.4**

(22) Anmeldetag: **09.06.2008**

(86) Internationale Anmeldenummer:
**PCT/EP2008/057148**

(87) Internationale Veröffentlichungsnummer:
**WO 2009/007185 (15.01.2009 Gazette 2009/03)**

(54) **VERFAHREN ZUM ERMITTELN EINER POSITION EINES ANKERS IN EINEM MAGNETVENTIL UND VORRICHTUNG ZUM BETREIBEN EINES MAGNETVENTILS MIT EINEM ANKER**

METHOD FOR DETERMINING A POSITION OF AN ARMATURE IN A SOLENOID VALVE AND A DEVICE FOR OPERATING A SOLENOID VALVE WITH AN ARMATURE

PROCEDE DE DETERMINATION DE LA POSITION D'UN INDUIT DANS UNE SOUPAPE MAGNETIQUE ET DISPOSITIF EN VUE DE L'ACTIONNEMENT D'UNE SOUPAPE MAGNETIQUE PAR UN INDUIT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.07.2007 DE 102007031552**

(43) Veröffentlichungstag der Anmeldung:
**14.04.2010 Patentblatt 2010/15**

(73) Patentinhaber: **Robert Bosch GmbH**
**70442 Stuttgart (DE)**

(72) Erfinder:
• **RAPP, Holger**
**71254 Ditzingen (DE)**
• **GANN, Thomas**
**71116 Gaertringen (DE)**

(56) Entgegenhaltungen:
DE-A1- 3 609 599       DE-A1- 3 843 138
DE-A1-102005 056 441   DE-A1-102005 059 176

EP 2 174 046 B1

**Beschreibung**

Die Erfindung betrifft ein Verfahren zum Ermitteln einer Position eines Ankers in einem Magnetventil. Des Weiteren betrifft die Erfindung eine Vorrichtung zum Betreiben eines Magnetventils mit einem Anker.

Bei einem modernen, mittels eines Magnetventils betriebenen Kraftstoffinjektor hat die Öffnungsdauer des Magnetventils einen entscheidenden Einfluss auf die eingespritzte Kraftstoffmenge. Diese Öffnungsdauer wird über eine Ansteuerdauer einer Magnetspule des Magnetventils mittelbar eingestellt.

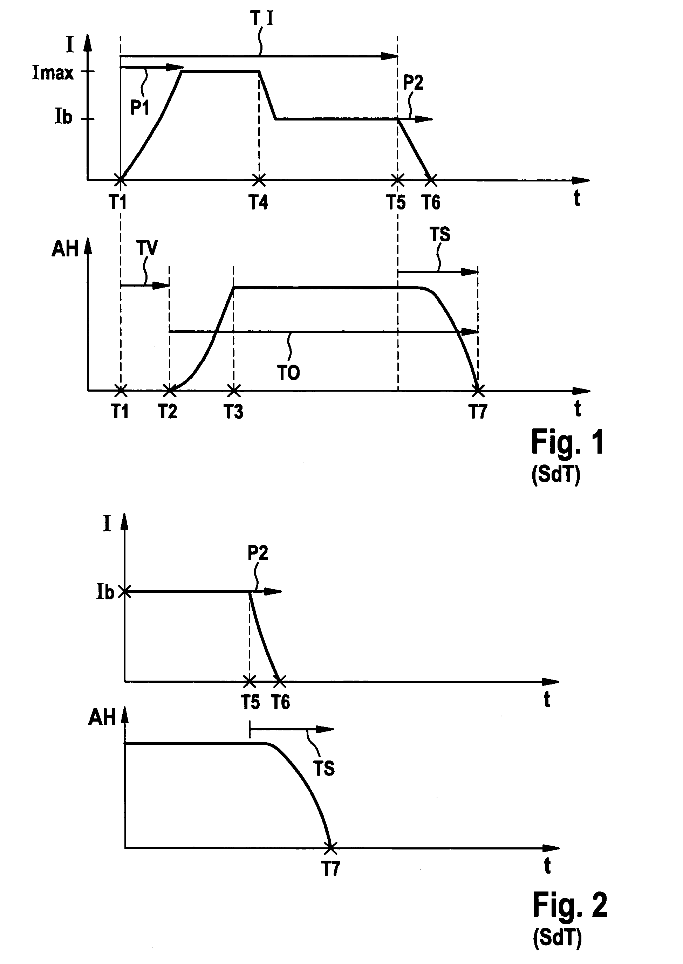

In Fig. 1 sind zwei Diagramme zum Darstellen eines Zusammenhangs zwischen einem Stromfluss durch eine Magnetspule eines Magnetventils und einem Ankerhub AH eines Ankers des Magnetventils gezeigt. Dabei geben die beiden Abszissen der Diagramme die Zeitachse t wieder. Eine der beiden Ordinaten entspricht der zeitabhängigen Stromstärke I des Stromes durch die Magnetspule. Die Werte der anderen Ordinate geben einen zeitabhängigen Ankerhub AH des Ankers des Magnetventils wieder.

Vor dem Zeitpunkt T1 fließt kein Strom durch die Magnetspule und die Stromstärke I liegt bei Null. Der Anker des Magnetventils befindet sich deshalb in seiner Schließposition und der Ankerhub AH ist gleich Null. Zum Zeitpunkt T1 wird ein Stromfluss durch die Magnetspule aktiviert. Dabei erhöht sich die Stromstärke I des Stromes innerhalb einer Phase P1 von dem Wert Null auf eine maximale Stromstärke Imax. Durch den Strom mit der während der Phase P1 zunehmenden Stromstärke I durch die Magnetspule wird ein Magnetfeld aufgebaut, welches eine Anziehungskraft auf den Anker des Magnetventils ausübt.

Ab einem Zeitpunkt T2 ist das Magnetfeld der Magnetspule groß genug, um den Anker aus seiner Schließposition zu bewegen. Der Anker wird dabei aus seiner Schließposition in Richtung seiner Öffnungsposition verschoben und der Ankerhub AH nimmt zu. Die Differenz zwischen den beiden Zeitpunkten T1 und T2 entspricht damit einer Verzugszeit TV, welche das Magnetventil benötigt, um auf eine Eingabe zum Öffnen des Magnetventils zu reagieren.

Zum Zeitpunkt T3 hat der Ankerhub AH seinen maximalen Wert erreicht und der Anker des Magnetventils befindet sich in seiner Öffnungsposition. Zu einem späteren Zeitpunkt T4 wird die Stromstärke I durch die Magnetspule ausgehend von der maximalen Stromstärke Imax auf eine Haltestromstärke Ib reduziert. Die Haltestromstärke Ib ist groß genug gewählt, um zu gewährleisten, dass der Anker in seiner Öffnungsposition verharrt.

Das geöffnete Magnetventil soll zum Zeitpunkt T5 wieder geschlossen werden. Dazu wird eine Löschspannung an die Magnetspule gelegt. Dies bewirkt, dass der Stromfluss durch die Magnetspule innerhalb einer Phase P2 beendet wird und die Stromstärke I solange sinkt, bis sie wieder den Wert Null annimmt. Ab dem Zeitpunkt T6 fließt kein Strom mehr durch die Magnetspule. Durch diesen Vorgang wird das Magnetfeld der Magnetspule abgebaut. Dies verringert die Anziehungskraft, welche das Magnetfeld auf den Anker ausübt. Der Anker wird deshalb ab einem nicht näher bezeichneten Zeitpunkt aus seiner Öffnungsposition in seine Schließposition zurückgeschoben und der Ankerhub AH erreicht zum Zeitpunkt T7 den Wert Null. Die Zeitdifferenz zwischen dem Zeitpunkt T5, an welchem die Löschspannung an die Magnetspule angelegt wird, und dem Zeitpunkt T7, an welchem der Anker erneut seine Schließstellung einnimmt, entspricht damit einer Schließzeit TS, welche das Magnetventil benötigt, um einer Eingabe zum Schließen des Magnetventils nachzukommen.

Fig. 2 zeigt einen Teilausschnitt der beiden Diagramme der Fig. 1 für einen Zeitabschnitt von dem Zeitpunkt T5 zum Zeitpunkt T7. Zum Zeitpunkt T5 wird eine Löschspannung an die Magnetspule des Magnetventils angelegt, um die Stromstärke I des Stromes durch die Magnetspule von der Haltestromstärke Ib auf den Wert Null zu reduzieren. Da der Zeitpunkt T5 durch das Anlegen der Löschspannung definiert ist, ist er mit hoher Genauigkeit bekannt. Die Phase P2, innerhalb der die Stromstärke I gegen Null geht, hängt nur von wenigen Faktoren ab und lässt sich damit relativ genau berechnen. Damit ist auch der Zeitpunkt T6, an welchem die Stromstärke I den Wert Null annimmt, mit hoher Genauigkeit ermittelbar. Nach dem Zeitpunkt T6 liegt die Stromstärke I konstant bei Null. Der Schließzeitpunkt T7 liegt erst nach dem Zeitpunkt T6 und damit in einem Zeitintervall, in dem die Stromstärke I konstant gleich null ist.

Während einer Ansteuerdauer TI, welche zum Zeitpunkt T1 beginnt und mit dem Zeitpunkt T5 endet, wird ein Stromfluss durch die Magnetspule aktiv unterstützt. Diese Ansteuerdauer TI wird durch ein Steuergerät mit hoher Genauigkeit vorgegeben. Die gesamte Öffnungsdauer TO des Magnetventils ergibt sich damit aus der Ansteuerdauer TI, der Verzugszeit TV und der Schließzeit TS. Dabei gilt:

$$TO = TI - TV + TS$$

Um zu gewährleisten, dass ein Magnetventil für eine gewünschte Öffnungsdauer TO geöffnet ist, muss eine Ansteuerdauer TI ermittelt werden, welche dies gewährleistet. Dazu müssen die Verzugszeit TV und die Schließzeit TS des Magnetventils unter den aktuellen Betreiberbedingungen bekannt sein. Die Verzugszeit TV ist normalerweise nur von wenigen Faktoren, wie beispielsweise dem Raildruck, abhängig, und kann deshalb mit guter Genauigkeit vorgegeben werden. Die Schließzeit TS hängt jedoch von relativ vielen Faktoren ab. Beispielsweise können der Raildruck, der Rücklauf-Gegendruck, der Ankerhub oder die Kraftstofftemperatur sowie eine der Feingeometrien der Einzelteile des Magnetventils nennenswerten Schwankungen bei der Schließzeit TS bewirken. Diese Schwankungen sind nur unzureichend vorhersagbar, und führen damit zu einer relativ hohe Ungenauigkeiten bei der Öffnungsdauer TO des Magnetventils. Die d aus resultierenden Abweichungen bei der Einspritzdauer sind verantwortlich für die Abweichungen der Einspritzmenge eines Kraftstoffs in einen Verbrennungsmotor von dem eigentlich gewünschten Sollwert.

Die DE 38 43 138 A1 schlägt deshalb vor, zum Schließen eines Magnetventils zuerst eine hohe Löschspannung an die Magnetspule des Magnetventils anzulegen, so dass der Spulenstrom in einer nachfolgenden, relativ kurzen Stromabbauphase einen großen negativen Gradienten aufweist und der Abbau des Magnetfelds der Magnetspule schnell erfolgt. Um dennoch die Bewegung des Ankers innerhalb des Magnetventils anhand eines zusätzlich induzierten Stroms oder einer zusätzlich induzierten Spannung nachzuweisen, wird vorgeschlagen, nach Ablauf einer Wartezeit erneut einem Stromfluss mit einer relativ geringen Stromstärke zu aktivieren.

Des Weiteren ist in der DE 36 09 599 A1 ein Verfahren beschrieben, bei welchem zum Schließen eines Magnetventils ein Strom durch eine Magnetspule des Magnetventils ausgehend von einer relativ großen Stromstärke zum Halten eines Ankers des Magnetventils in seiner Öffnungsposition auf eine relativ geringe Stromstärke reduziert wird. Die relativ geringe Stromstärke ist dabei so gewählt, dass sich die Verschiebung des Ankers anhand eines zusätzlich induzierten Stroms oder einer zusätzlich induzierten Spannung gerade noch nachweisen lässt. Zum Reduzieren der Stromstärke auf die relativ geringe Stromstärke werden kurzzeitig eine relativ hohe Löschspannung und nachfolgend eine konstante Spannung an die Magnetspule angelegt.

Die in der DE 38 43 138 A1 und in der DE 36 09 599 A1 beschriebenen Verfahren erfordern zu ihrer Durchführung jedoch einen relativ hohen Schaltungs- und Steuerungsaufwand. Wünschenswert wäre es jedoch, eine Möglichkeit zum Ermitteln einer Ankerbewegung zu haben, deren Durchführung mit einem reduzierten Schaltungsaufwand möglich ist.

Die Erfindung schafft ein Verfahren mit den Merkmalen des Anspruchs 1 und eine Vorrichtung mit den Merkmalen des Anspruchs 8.

Die Erfindung beruht auf der Erkenntnis, dass der bei den herkömmlichen Verfahren zum Ermitteln einer Bewegung eines Ankers notwendige Schaltungsaufwand reduzierbar ist, indem zum Schließen des Magnetventils eine relativ geringe, während des gesamten Schließvorgangs konstant gehaltene Löschspannung an die Magnetspule angelegt wird. Die konstant gehaltene Löschspannung ist dabei so dimensioniert, dass zu einem Zeitpunkt, an welchem der Anker ausgehend von einer Ausgangsposition in eine vorgegebene Position übergeht, der Strom durch die Magnetspule noch eine Mindeststromstärke aufweist, welche es ermöglicht, anhand des Stromverlaufs die Bewegung des Ankers zu ermitteln. Dies ist realisierbar, indem eine Zeitdauer vorgegeben wird, innerhalb welcher der Anker bei einem Reduzieren und/oder Unterbrechen des Stromes durch die Magnetspule mit einer hohen Wahrscheinlichkeit von der Ausgangsposition in die Position übergeht. Das Einnehmen der vorgegebenen Position durch den Anker ist dabei so zu verstehen, dass der Anker zumindest die Position durchläuft. Anschließend kann der Anker entweder in der Position verharren oder seine Bewegung fortsetzen. Der Betrag der zeitlich konstanten Löschspannung ist so festgelegt, dass die Stromstärke des Stromes während der gesamten Zeitdauer nach einem Anlegen der Löschspannung an die Magnetspule eine Mindeststromstärke nicht unterschreitet.

In einer bevorzugten Ausführungsform des Verfahrens wird eine zeitliche Ableitung der gemessenen Stromstärke des Stromes zum Ermitteln des Zeitpunkts berechnet. Dabei nutzt das Verfahren den Vorteil, dass bei einem Stromfluss die Stromänderungsgeschwindigkeit von der Geschwindigkeit des Ankers beeinflusst wird.

Vorzugsweise ist die vorgegebene Position des Ankers eine Endposition einer Bewegung des Ankers in eine Richtung. Insbesondere kann die Endposition eine Anschlagposition des Ankers sein, über die hinaus eine Bewegung des Ankers in die Richtung nicht mehr möglich ist. Beispielsweise wird als Endposition eine Schließposition des Ankers ermittelt. Damit lässt sich die Schließzeit des zugehörigen Magnetventils mit hoher Genauigkeit bestimmen. Die Zeitdauer kann in diesem Fall so gewählt werden, dass sie einer maximalen Schließzeit des Ankers bei für den Schließvorgang ungünstigen Faktoren entspricht.

In einer vorteilhaften Weiterbildung des Verfahrens wird als Zeitpunkt, in welchem der Anker in die Endposition übergeht, der Zeitpunkt einer Unstetigkeit der berechneten zeitlichen Ableitung der gemessenen Stromstärke des Stromes erkannt. Auf diese Weise lässt sich der Zeitpunkt, an welchem der Anker in die vorgegebene Endposition übergeht, einfach und verlässlich bestimmen.

In einer Weiterbildung des Verfahrens wird anhand des erkannten Zeitpunkts, in welchem der Anker in seine Schließposition übergeht, eine Ansteuerdauer bestimmt, während welcher der Stromfluss durch die Spule aktiv unterstützt wird, um das Magnetventil für eine gewünschte Öffnungsdauer zu öffnen. Der Strom durch die Magnetspule des Magnetventils kann dabei zumindest die vorgegebene Ausgangsstromstärke haben. Dies gewährleistet eine erheblich erhöhte Genauigkeit beim Einhalten einer gewünschten Einspritzmenge. Des Weiteren kann als zeitlich konstante Löschspannung eine Spannung gleich Null ermittelt und angelegt werden.

Weitere Anwendungsmöglichkeiten und Vorteile der Erfindung ergeben sich aus der nachfolgenden Beschreibung eines Ausführungsbeispiels. Es zeigen:

Fig. 1    zwei Diagramme zum Darstellen eines Zusammenhangs zwischen einem Stromfluss durch eine Magnetspule eines Magnetventils und einem Ankerhub eines Ankers des Magnetventils bei einem herkömmlichen Ansteuern des Magnetventils;

Fig. 2 einen Ausschnitt aus den beiden Diagrammen der Fig. 1; und

Fig. 3 drei Diagramme zum Darstellen eines Zusammenhangs zwischen einem Stromfluss durch eine Magnetspule eines Magnetventils, einer zeitlichen Ableitung der Stromstärke und einem Ankerhub eines Ankers des Magnetventils bei einer Ausführungsform des Verfahrens zum Ermitteln einer Position des Ankers in dem Magnetventil.

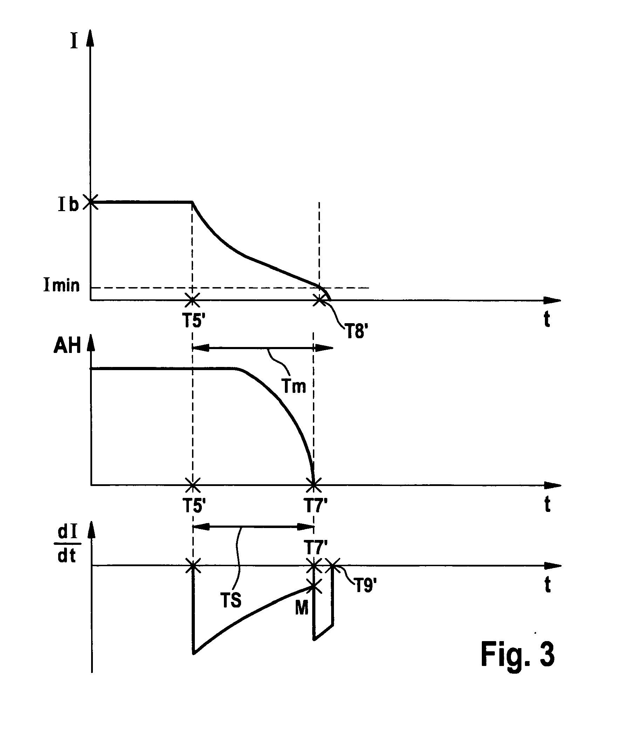

Fig. 3 zeigt drei Diagramme zum Darstellen eines Zusammenhangs zwischen einem Stromfluss durch eine Magnetspule eines Magnetventils, einer zeitlichen Ableitung der Stromstärke und einem Ankerhub eines Ankers des Magnetventils bei einer Ausführungsform des Verfahrens zum Ermitteln einer Position des Ankers in dem Magnetventil. Dabei ist die Abszisse der drei Diagramme immer eine Zeitachse t. Die Ordinate des ersten Diagramms gibt die mit Hilfe des Verfahrens sich ergebende Stromstärke I des Stromes durch die Magnetspule wieder. Auf der Ordinate des zweiten Diagramms ist der Ankerhub AH des Ankers des Magnetventils aufgetragen. Die zeitliche Ableitung der Stromstärke I wird auf der Ordinate des dritten Diagramms aufgetragen.

Vor einem Zeitpunkt T5' fließt durch die Magnetspule des Magnetventils ein Strom mit einer konstanten Haltestromstärke Ib. Die Haltestromstärke Ib ist so gewählt, dass der Anker aufgrund des durch diesen Strom erzeugten Magnetfelds in seiner Öffnungsstellung verharrt und der Ankerhub AH seinen maximalen Wert aufweist. Das Magnetventil ist damit vor dem Zeitpunkt T5' geöffnet und durch den mit dem Magnetventil betriebenen Kraftstoffinjektor kann ein Kraftstoff in einen Verbrennungsmotor eingespritzt werden.

Zum Zeitpunkt T5' soll der Schließvorgang des Magnetventils eingeleitet werden. Dazu wird vom Zeitpunkt T5' an eine zeitlich konstante Löschspannung an die Magnetspule angelegt. Diese Löschspannung ist so gewählt, dass die Stromstärke I zum Zeitpunkt T5'+Tm noch größer ist als eine vorgegebene Mindeststromstärke Imin. Dabei ist die Zeitdauer Tm wiederum so gewählt, dass der Anker mit einer hohen Wahrscheinlichkeit nach Beginn eines Anlegens der zeitlich konstanten Löschspannung vor dem Zeitpunkt T5'+Tm seine Schließposition erreicht. Vorzugsweise ist die Zeitdauer Tm also größer als eine Schließzeit TS des Magnetventils unter für die Schließbewegung des Ankers ungünstigen Faktoren.

Die vorgegebene Mindeststromstärke Imin entspricht dabei einem Grenzwert, oberhalb dessen die Stromstärke I noch groß genug ist, um anhand einer zeitlichen Ableitung der Stromstärke I eine Bewegung des Ankers feststellen zu können. Während der Zeitdauer Tm weist die negative Löschspannung einen konstanten Wert auf. Damit reduziert sich der Schaltungsaufwand zum Ansteuern des Magnetventils während einem Schließen des Magnetventils.

Aufgrund der an die Magnetspule angelegten Löschspannung nimmt die Stromstärke I beginnend mit dem Zeitpunkt T5' stetig ab. Während die zeitliche Ableitung der Stromstärke I vor dem Zeitpunkt T5' gleich Null war, nimmt sie ab dem Zeitpunkt T5' negative Werte an. Aufgrund der Reduzierung des Stromes durch die Magnetspule baut sich das Magnetfeld der Magnetspule ab. Unterhalb einer bestimmten Mindestmagnetfeldstärke ist die Kraft, welche durch das Magnetfeld auf den Anker ausgeübt wird, nicht mehr ausreichend, um den Anker in seiner Öffnungsposition zu halten. Der Anker wird daraufhin in Richtung seiner Schließposition verschoben und der Ankerhub AH nimmt stetig ab. Dabei führt die Bewegung des Ankers weg von der Magnetspule zu einer Verlangsamung des Stromabbaus, welche sich über die zeitliche Ableitung der Stromstärke I nachweisen lässt.

Zum Zeitpunkt T7' hat der Anker seine Schließposition erreicht und der Ankerhub AH weist den Wert Null auf. Der Anker stößt gegen eine Kontaktkomponente, wird in seiner Bewegung sehr schnell abgebremst und zum Stillstand gebracht. Da sich der Anker ab dem Zeitpunkt T7' nicht mehr bewegt, erfolgt nach dem Zeitpunkt T7' keine Verlangsamung des Stromabbaus mehr.

Da der Strom durch die Magnetspule zum Zeitpunkt T7' eine Stromstärke I aufweist, welche größer als die Mindeststromstärke Imin ist, lässt sich der unstetige Verlauf der zeitlichen Ableitung der Stromstärke I verlässlich nachweisen. Damit lässt sich das Abbremsen des Ankers anhand der Unstetigkeit M der zeitlichen Ableitung der Stromstärke I zum Zeitpunkt T7' ermitteln. Da der Zeitpunkt T5', an welchem die negative Löschspannung an die Magnetspule angelegt wurde, bekannt ist, lässt sich aus der Differenz der Zeitpunkte T7' und T5' die Schließzeit TS des Magnetventils berechnen. Die berechnete Schließzeit TS des Magnetventils kann anschließend dazu verwendet werden, eine Ansteuerdauer TI zu ermitteln, welche eine gewünschte Öffnungsdauer TO zum genauen Einhalten einer vorgegebenen Einspritzmenge gewährleistet.

## Patentansprüche

1. Verfahren zum Ermitteln einer vorgegebenen Position eines Ankers in einem Magnetventil, wobei der Anker durch Reduzieren eines Stromes (I) durch eine Magnetspule des Magnetventils mit einer Ausgangsstromstärke (Ib) aus einer vorgegebenen Ausgangsposition in die Position überführbar ist, mit den Schritten:

- Vorgeben einer Zeitdauer (Tm), innerhalb welcher der Anker bei einem Reduzieren des Stromes (I) durch die Magnetspule des Magnetventils mit der Ausgangsstromstärke (Ib) aus der Ausgangsposition in die Position übergehen soll;
- Ermitteln einer zeitlich konstanten Löschspannung, die so dimensioniert ist, dass der Strom (I) durch die Magnetspule des Magnetventils durch Anlegen der zeitlich konstanten Löschspannung an die Magnetspule während der Zeitdauer (Tm) ausgehend von der Ausgangsstromstärke (Ib) auf eine Endstromstärke größer als eine vorgegebene Mindeststromstärke (Imin) reduziert wird, und der Anker bei Anlegen der zeitlich konstanten Löschspannung an die Magnetspule innerhalb der Zeitdauer (Tm) aus der Ausgangsposition in die Position übergeht;
- Anlegen der zeitlich konstanten Löschspannung an die Magnetspule des Magnetventils für mindestens die vorgegebene Zeitdauer (Tm) und Messen einer Stromstärke des Stromes (I) durch die Magnetspule; und
- Erkennen des Zeitpunkts (T7'), in welchem der Anker in die Position übergeht, anhand des zeitlichen Verlaufs der gemessenen Stromstärke des Stromes (I) durch die Magnetspule während der vorgegebenen Zeitdauer (Tm).

2. Verfahren nach Anspruch 1, wobei eine zeitliche Ableitung der gemessenen Stromstärke des Stromes (I) zum Ermitteln des Zeitpunkts (T7') berechnet wird.

3. Verfahren nach Anspruch 1 oder , wobei die vorgegebene Position des Ankers eine Endposition einer Bewegung des Ankers in eine Richtung ist.

4. Verfahren nach Anspruch 3, wobei als Zeitpunkt (T7'), in welchem der Anker in die Endposition übergeht, der Zeitpunkt einer Unstetigkeit (M) der berechneten zeitlichen Ableitung der gemessenen Stromstärke des Stromes (I) erkannt wird.

5. Verfahren nach einem der Ansprüche 3 oder 4, wobei als Endposition eine Schließposition des Ankers ermittelt wird.

6. Verfahren nach Anspruch 5, wobei anhand des erkannten Zeitpunkts (T7'), in welchem der Anker in seine Schließposition übergeht, eine Ansteuerdauer (TI) bestimmt wird, während welcher der Stromfluss durch die Spule aktiv unterstützt wird, um das Magnetventil für eine gewünschte Öffnungsdauer (TO) zu öffnen.

7. Verfahren nach einem der vorhergehenden Ansprüche, wobei als zeitlich konstante Löschspannung eine Spannung gleich Null ermittelt und angelegt wird.

8. Vorrichtung zum Betreiben eines Magnetventils mit einem Anker

- mit einer Steuereinrichtung, die dazu ausgelegt ist, einen Strom (I) durch eine Magnetspule des Magnetventils mit einer vorgegebenen Ausgangsstromstärke (Ib) für eine vorgegebene Ansteuerdauer (TI) aufrechtzuerhalten, um den Anker des Magnetventils in einer vorgegebenen Ausgangsposition zu halten, und, eine vorgegebene zeitlich konstante Löschspannung an die Magnetspule für eine vorgegebene Zeitdauer (Tm) anzulegen, um den Anker aus der vorgegebenen Ausgangsposition in eine vorgegebene Position zu überführen;
- mit einer Speichereinrichtung, auf welcher die zeitlich konstante Löschspannung abgespeichert sind, wobei die zeitlich konstante Löschspannung so dimensioniert ist, dass bei einem Anlegen der zeitlich konstanten Löschspannung an die Magnetspule der Strom (I) durch die Magnetspule ausgehend von der Ausgangsstromstärke (Ib) nach Ablauf der Zeitdauer (Tm) auf eine Endstromstärke größer als eine vorgegebene Mindeststromstärke (Imin) reduziert wird und der Anker des Magnetventils innerhalb der Zeitdauer (Tm) aus der Ausgangsposition in die Position übergeht;
- mit einer Sensoreinrichtung zum Messen einer Stromstärke des Stromes (I) durch die Magnetspule während der Zeitdauer (Tm); und
- mit einer Auswerteeinrichtung zum Ermitteln des Zeitpunkts (T7'), an welchem der Anker in die vorgegebene Position übergeht, anhand des zeitlichen Verlaufs der gemessenen Stromstärke des Stromes (I) durch die Magnetspule während der vorgegebenen Zeitdauer(Tm).

**Claims**

1. Method for determining a prespecified position of an armature in a solenoid valve, wherein the armature can be moved from a prespecified starting position to the position by reducing a current (I) through a magnet coil of the solenoid valve at an output current level (Ib), comprising the steps of:

- prespecifying a time period (Tm) within which the armature should move from the starting position to the position when the current (I) through the magnet coil of the solenoid valve is reduced at the output current level (Ib);
- determining an extinction voltage which is constant over time and is of such a magnitude that the current (I) through the magnet coil of the solenoid valve is reduced by applying the extinction voltage which is constant over time to the magnet coil during the time period (Tm) starting from the output current level (Ib) to a final current level greater than a prespecified minimum current level (Imin), and the armature moves from the starting position to the position when the extinction voltage which is constant over time is applied to the magnet coil within the time period (Tm);

- applying the extinction voltage which is constant over time to the magnet coil of the solenoid valve for at least the prespecified time period (Tm) and measuring a current level of the current (I) through the magnet coil; and

- identifying the time (T7') at which the armature moves to the position on the basis of the time profile of the measured current level of the current (I) through the magnet coil during the prespecified time period (Tm).

2. Method according to Claim 1, wherein a derivative of the measured current level of the current (I) with respect to time is calculated in order to determine the time (T7').

3. Method according to Claim 1 or 2, wherein the prespecified position of the armature is an end position of a movement of the armature in one direction.

4. Method according to Claim 3, wherein the time of a discontinuity (M) in the calculated derivative of the measured current level of the current (I) with respect to time is identified as the time (T7') at which the armature moves to the end position.

5. Method according to either of Claims 3 and 4, wherein a closed position of the armature is determined as the end position.

6. Method according to Claim 5, wherein an actuation period (TI) is determined on the basis of the identified time (T7') at which the armature moves to its closed position, the current flow through the coil being actively assisted during the said actuation period in order to open the solenoid valve for a desired opening period (TO).

7. Method according to one of the preceding claims, wherein a voltage equal to zero is determined and applied as the extinction voltage which is constant over time.

8. Apparatus for operating a solenoid valve having an armature

- having a control device which is designed to maintain a current (I) through a magnet coil of the solenoid valve at a prespecified output current level (Ib) for a prespecified actuation period (TI) in order to keep the armature of the solenoid valve in a prespecified starting position, and to apply a prespecified extinction voltage which is constant over time to the magnet coil for a prespecified time period (Tm) in order to move the armature from the prespecified starting position to a prespecified position;

- having a storage device in which the extinction voltage which is constant over time is stored, wherein the extinction voltage which is constant over time is of such a magnitude that, when the extinction voltage which is constant over time is applied to the magnet coil, the current (I) through the magnet coil is reduced to a final current level which is greater than a prespecified minimum current level (Imin) starting from the output current level (Ib) after the time period (Tm) elapses and the armature of the solenoid valve moves from the starting position to the position within the time period (Tm);

- having a sensor device for measuring a current level of the current (I) through the magnet coil during the time period (Tm); and

- having an evaluation device for determining the time (T7') at which the armature moves to the prespecified position on the basis of the time profile of the measured current level of the current (I) through the magnet coil during the prespecified time period (Tm).

**Revendications**

1. Procédé de détermination d'une position prédéterminée de l'induit d'une soupape magnétique, l'induit pouvant, par réduction à une intensité initiale (Ib) du courant (I) qui traverse un bobinage magnétique de la soupape magnétique du courant, être amené dans cette position depuis une position initiale prédéterminée, le procédé comportant les étapes qui consistent à :

définir une durée (Tm) en laquelle l'induit doit, par réduction à une intensité initiale (Ib) du courant (I) qui traverse le bobinage magnétique de la soupape magnétique, être transféré depuis la position initiale jusque dans la position,

déterminer une tension d'extinction constante dans le temps et dimensionnée de telle sorte que par application de la tension d'extinction constante dans le temps sur le bobinage magnétique pendant la durée (Tm), le courant (I) qui traverse le bobinage magnétique de la soupape magnétique soit réduit depuis l'intensité (Ib) initiale du courant jusqu'à une intensité finale du courant supérieure à une intensité minimale (Imin) prédéterminée du courant, l'induit passant de la position initiale à la position lors de l'application de la tension d'extinction constante dans le temps sur le bobinage magnétique pendant la durée (Tm),

appliquer la tension d'extinction constante dans le temps sur le bobinage magnétique de la soupape magnétique pendant au moins la durée (Tm) prédéterminée et mesurer l'intensité du courant (I) qui traverse le bobinage magnétique et

à l'aide de l'évolution dans le temps de l'intensité mesurée du courant (I) qui traverse le bobinage magnétique pendant la durée prédéterminée (Tm), détecter l'instant (T7') auquel l'induit passe dans la position.

2. Procédé selon la revendication 1, dans lequel une dérivée par rapport au temps de l'intensité mesurée du courant (I) est calculée pour déterminer l'instant (T7').

3. Procédé selon les revendications 1 ou 2, dans lequel la position prédéterminée de l'induit est une position finale d'un déplacement de l'induit dans une direction.

4. Procédé selon la revendication 3, dans lequel l'instant (T7') auquel l'induit passe dans la position finale est détecté comme étant l'instant d'une discontinuité (M) de la dérivée calculée par rapport au temps de l'intensité mesurée du courant (I).

5. Procédé selon l'une des revendications 3 ou 4, dans lequel la position finale déterminée est la position de fermeture de l'induit.

6. Procédé selon la revendication 5, dans lequel à l'aide de l'instant (T7') détecté auquel l'induit passe dans sa position de fermeture, une durée (TI) de commande est déterminée pendant laquelle le flux de courant traversant le bobinage est soutenu activement pour ouvrir la soupape magnétique pendant une durée d'ouverture (TO) souhaitée.

7. Procédé selon l'une des revendications précédentes, dans lequel une tension égale à zéro est déterminée et appliquée en tant que tension d'extinction constante dans le temps.

8. Ensemble de commande d'une soupape magnétique dotée d'un induit, l'ensemble comprenant :

- un dispositif de commande conçu pour maintenir à une intensité initiale prédéterminée (Ib) un courant (I) qui traverse un bobinage magnétique de la soupape magnétique pendant une durée de commande (TI) pour maintenir l'induit de la soupape magnétique dans une position initiale prédéterminée et pour appliquer une tension d'extinction prédéterminée, constante dans le temps, sur le bobinage magnétique pendant une durée prédéterminée (Tm) pour amener l'induit depuis la position initiale prédéterminée jusque dans une position prédéterminée,

- un dispositif de mémoire dans lequel la tension d'extinction constante dans le temps est conservée, la tension d'extinction constante dans le temps étant dimensionnée de telle sorte que lorsque la tension d'extinction constante dans le temps est appliquée sur le bobinage magnétique, le courant (I) qui traverse le bobinage magnétique est réduit depuis l'intensité initiale (Ib) du courant jusqu'à une intensité finale du courant supérieure à une intensité minimale prédéterminée (Imin) du courant après que la durée (Tm) s'est écoulée, et que l'induit de la soupape magnétique passe de la position initiale jusque dans la position à l'intérieur de la durée (Tm),

- un dispositif de détection qui mesure l'intensité du courant (I) qui traverse le bobinage magnétique pendant la durée (Tm) et

- un dispositif d'évaluation qui détermine à l'aide de l'évolution temporelle de l'intensité mesurée du courant (I) qui traverse le bobinage magnétique pendant la durée prédéterminée (Tm) l'instant (T7') auquel l'induit passe dans la position prédéterminée.

**Fig. 1**
(SdT)

**Fig. 2**
(SdT)

Fig. 3

**EP 2 174 046 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3843138 A1

- DE 3609599 A1